# EUROPEAN PATENT APPLICATION

(11) **EP 1 717 476 A1**
(43) Date of publication of application: **02.11.2006**
(21) Application number: 06005572.0
(22) Date of filing: 18.03.2006
(51) Int. Cl.: F16D 65/097, F16D 66/02

(54) **Pad retaining clip**

(30) Priority: 25.04.2005 US 113911
(71) Applicant: Akebono Corporation North America, Farmington Hills, MI 48331 (US)
(72) Inventor: Farooq, Muhammad, Farmington Hills Michigan 48334 (US)
(74) Representative: Müller, Thomas Michael

(57) **Abstract**

A caliper assembly (20) has a body member (22), a support bracket (24) and a pair of brake assemblies. At least one retaining clip (40) is coupled with each brake assembly. The retaining clip includes a first, second and third portion. The third portion is adapted to contact the caliper support bracket (24) to prevent the brake pad assembly from falling into the rotor clearance gap. The second portion provides a gap between the third portion and the support bracket (24) to provide enough distance to enable proper functioning of the brake pad assembly while prohibiting the brake pad assembly from falling into the rotor clearance gap.

## Description

### FIELD OF THE INVENTION

The present invention relates to brake calipers and, more specifically, to a device to retain a brake pad assembly in the caliper support bracket when the brake assembly moves into the rotor clearance gap.

With existing caliper designs, brake pad assemblies easily move and often fall through the rotor clearance gap during shipping and handling at assembly plants. A plastic tee or a sponge spacer has been used at the plants to prevent the brake pad assemblies from sliding out and falling off of the caliper assembly. However, the problem is not completely satisfied in that, when the sponge or tee is removed during assembly, the brake pad assembly can still fall off while the worker is assembling the caliper with the rotor. Thus, it would be desirable to have a retaining clip which is maintained on the brake pad assembly and prohibits the brake pad assembly from falling out through the rotor clearance gap.

### SUMMARY OF THE INVENTION

The present invention provides the art with a retaining clip which is secured to the brake pad assembly. The retaining clip prohibits the brake pad from falling through the rotor clearance gap. Also, the present invention does not interfere with the brake pad assembly during normal use of the brake pad assembly in the caliper. The present invention is a simple, yet effective, mechanism to retain the brake pad assembly in its position during shipping and handling, as well as assembly. Further, the present invention maintains the brake pads in position during inspection or repair.

In accordance with an object of the present invention, a brake pad retaining clip comprises a body member having a first portion adapted to be secured to a brake pad pressure plate. A second portion extends from the first portion. A third portion extends from the second portion and is adapted to contact a caliper support bracket to prevent the brake pad assembly from falling into the rotor clearance gap. This second portion provides a gap between the third portion and a support bracket. The gap provides enough distance to enable proper functioning of the brake pad assembly when it is positioned in a caliper assembly, however, it prohibits the brake pad assembly from entering into the rotor clearance gap. The first portion includes a member to secure it to a brake pad pressure plate. It may be a tang or a clip. The second portion may include a biasing member such as a spring. The third portion may include a wear indicator. The first portion and third portion are generally substantially parallel to one another.

In accordance with a second embodiment of the present invention, a caliper brake assembly comprises a body member having a piston mechanism and a support bracket coupled with the body member. A pair of brake pad assemblies are coupled with the body member and the support member. At least one retaining clip is coupled with each of the brake pad assemblies. The retaining clip has a body member having a first portion secured to a brake pad pressure plate. A second portion extends from the first portion. A third portion extends from the second portion and is adapted to contact the caliper support bracket to prevent the brake pad assembly from falling into the rotor clearance gap. This second portion provides a gap between the third portion and the support bracket. The gap provides enough distance to enable proper functioning of the brake pad assembly when it is positioned in the caliper assembly, however, it prohibits the brake pad assembly from entering into the rotor clearance gap. The first portion includes a member to secure it to a brake pad plate. It may be a tang or a clip. The second portion may include a biasing member such as a spring. The third portion may include a wear indicator. The first portion and third portion are generally substantially parallel to one another. Also, each brake pad assembly may include a plurality of retaining clips. The gap has a width between about 6 to about 18 mm.

From the following detailed description, taken in conjunction with the following detailed description and subjoined drawings and claims, other objects and advantages of the present invention will become apparent to those skilled in the art.

### BRIEF DESCRIPTION OF THE DRAWINGS

The present invention will become more fully understood from the detailed description and the accompanying drawings, wherein:
- Figure 1: is a perspective view of a caliper assembly with a brake pad retaining clip in accordance with the present invention.
- Figure 2: is a cross section view of Figure 1 along line 2-2 thereof.
- Figure 3: is a view like Figure 2 with the brake assembly moved inward towards the rotor.
- Figure 4: is an elevation view of a brake assembly on a support bracket.
- Figure 5: is a cross section view of an additional embodiment of the present invention.
- Figure 6: is a third embodiment of the present invention.
- Figure 7: is a fourth embodiment of the present invention.
- Figure 8: is a fifth embodiment of the present invention.
- Figure 9: is a sixth embodiment of the present invention.
- Figure 10: is a view like Figure 2 illustrating the clip prohibiting improper insertion of the brake pad assembly.

### DETAILED DESCRIPTION OF THE PREFERRED EMBODIMENTS

The following description of the preferred embodiment(s) is merely exemplary in nature and is in no way intended to limit the invention, its application, or uses.

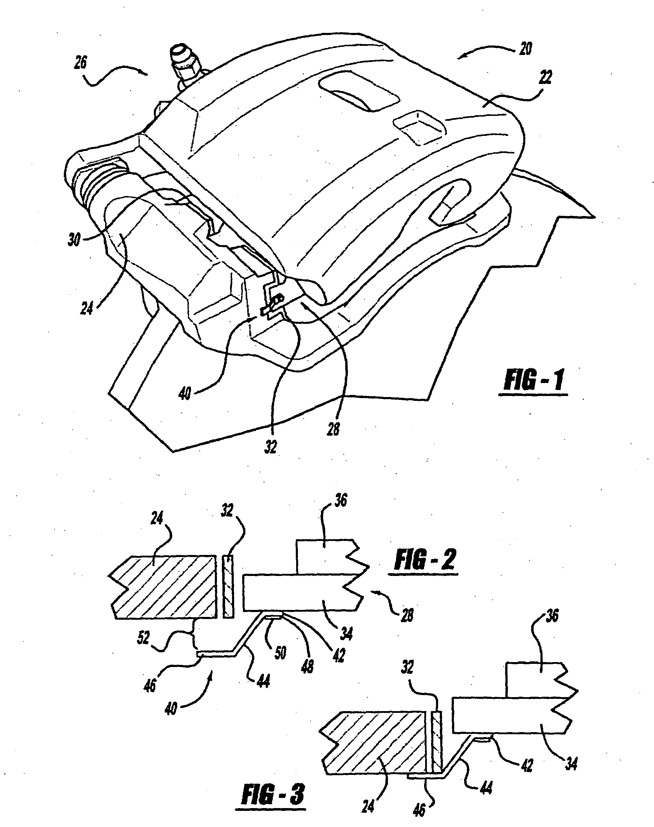

Turning to the Figures, particularly Figure 1, a caliper assembly is shown and designated with the reference numeral 20. The caliper assembly 20 includes a body 22 and a support bracket 24. The body 22 includes a piston mechanism 26 like those conventional in the art. A pair of brake pad assemblies 28 and 30 are mounted on the support bracket 24. Pad clips 32 are positioned in the support bracket between the pad assemblies 28 and 30 and the support bracket 24.

The brake pad assemblies 28 and 30 include pressure plates 34 and friction pads 36. The pressure plates 34 are generally manufactured from a metallic material. At least one pad retaining clip 40 is secured to the pressure plate 34 to prohibit the brake pad assemblies 28 and 30 from falling off or falling through the rotor clearance gap.

The pad retaining clip 40 includes a body member having a first portion 42, a second portion 44 and a third portion 46. The first portion 42 includes a securement mechanism 48 which may be an aperture to enable the clip to be connected to the pressure plate 34. A pin 50, which extends from the pressure plate 34, may project through the aperture 48 and be peened to retain the pad retaining clip 40 onto the pressure plate 34.

The second portion 44 extends from the first portion 42. The second portion 44 is generally angled with respect to the first portion 42. The second portion 44 extends to the third portion 46. The second portion 44 provides a clearance gap 52 between the bracket support 24 and the third portion 46. This clearance gap 52 has a thickness of about 6 to about 18 mm. The clearance gap enables the pad assemblies 28 and 30 to function normally in the caliper without interfering with the operation of the brake pad assemblies 28, 30

The third portion 46 extends from the second portion 44. The third portion 46 is generally parallel to the first portion 42. The third portion 46 has a desired length so that as the pad assemblies 28 or 30 move into the rotor clearance gap, the third portion 46 contacts the support bracket 24 prohibiting entrance of the brake pad assemblies 28, 30 into the rotor clearance gap. Thus, the pad retaining clip 40 enables operation of the brake pad assemblies once it is assembled in the caliper while prohibiting the pad assemblies from falling out of the caliper assembly during transportation or assembly of the caliper.

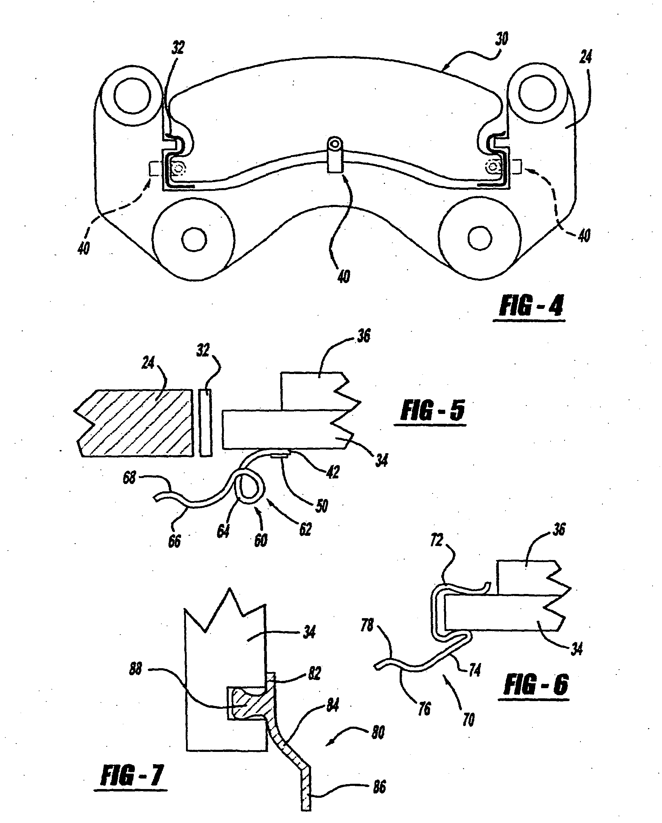

The pad retaining clip 40 may be assembled on the ear portions of the pressure plate 34, as illustrated in Figures 1 through 3. Further, the pad retaining clip 40 may be positioned in the center of the pressure plate, as illustrated in Figure 4. Further, a plurality of clips 40, as illustrated in phantom in Figure 4, may be positioned at the ear or the middle or in some other orientation to maintain the brake pad assemblies from falling into the rotor clearance gap.

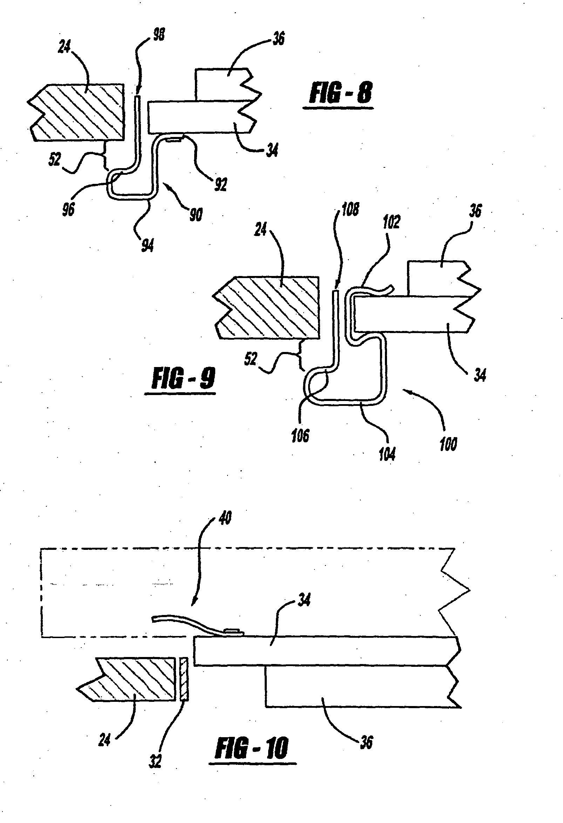

Turning to Figure 5, an additional embodiment of the present invention is shown. Here, elements which are the same as previously discussed are identified with the same reference numeral. The pad clip 60 includes a first portion 42 like that previously discussed which may be peened onto the pressure plate 34. The second portion 62 includes a biasing or spring member 64 to provide a biasing force for the pad retaining clip 60. Also, the third portion 66 may have a curve 68 to provide spring biasing features.

Figure 6 illustrates an additional embodiment of the present invention. In Figure 6, the pad clip 70 includes a first portion 72, second portion 74 and a third portion 76. The first portion 72 has an overall U-shape which enables the first portion 72 to frictionally attach onto the pressure plate 34. Thus, the retaining clip 70 is slid on or clipped onto the brake assembly. The second portion 74 angles away from one leg of the U-shaped first portion 72 and extends to the third portion 76. The third portion 76 includes a curved portion 78 to contact the support bracket.

Turning to Figure 7 an additional embodiment of the present invention is shown. Here, the pad clip 80 includes a first portion 82, a second portion 84 and a third portion 86. The first portion 82 includes a tang or the like 88 which may be pressfit into a bore in the pressure plate 34. The pressfit secures the retaining pad 80 onto the pressure plate 34. The second portion 84 and third portion 86 are like those previously discussed with respect to the first embodiment. Alternatively, the pad clip may include a plastic tab which snaps into the pressure plate 34.

Figures 8 and 9 illustrate additional embodiments of the present invention. Here, the pad retaining clip 90 and 100 include wear indicators 98 and 108. The wear indicators 98 and 108 contact the rotor as the pad assemblies wear. The retaining clip 90 includes a first portion 92 to be retained or peened onto the pressure plate 34. The second portion 94 has an elongated S-shape with the third portion 96 doubling back to be in contact with the support bracket 24. The wear indicator 98 extends from the third portion 96. The third portion 96 is parallel with the first portion 92 and is positioned at a distance of about 6 to about 18 mm from the support bracket 24. Thus, the gap 52 is the same as that previously discussed.

The retaining clip 100 includes a friction attachment first portion 102 which clips or slides onto the pressure plate 34. The second portion 104 extends from one leg of the U-shaped clamp first portion 102. The third portion 106 includes the wear indicator 108. The third portion 106 is positioned at the desired distance from the support bracket 24.

Turning to Figure 10, a brake pad assembly with the retaining clip of the present invention is shown. Here, it is illustrated that the brake pad assemblies cannot be mis-installed into the caliper assembly. To do so, the clip would be in contact with the rotor or the pad in contact with the piston or finger. Thus, the clip prohibits misdirection and misassembly of the pad assemblies into the caliper.

While the above detailed description provides a preferred embodiment of the present invention, those skilled in the art will appreciate that modification, variation, alterations may occur without deviating from the scope and fair meaning of the present invention.

## Claims

1. A brake pad retaining clip comprising:
a body member, said body member having a first portion adapted to be secured to a brake pad plate, a second portion extending from said first portion, said third portion extending from said second portion, said third portion adapted to contact a caliper support bracket for preventing the brake pad assembly from falling into the rotor clearance gap, said second portion providing a gap between said third portion and said support bracket, said gap providing enough distance to enable proper functioning of the brake pad assembly when it is positioned into a caliper assembly.

2. The brake pad retaining clip according to claim 1, wherein said first portion includes a clamping member for securing to the brake pad plate.

3. The brake pad retaining clip according to any one of the preceding claims, wherein said first portion includes a tang for securing to the brake pad plate.

4. The brake pad retaining clip according to any one of the preceding claims, wherein said second portion includes a biasing member.

5. The brake pad retaining clip according to any one of the preceding claims, wherein said third portion includes a wear indicator.

6. The brake pad retaining clip according to any one of the preceding claims, wherein said first portion includes a member adapted to secure with a fastener.

7. The brake pad retaining clip according to any one of the preceding claims, wherein said first and third portions are substantially parallel to one another.

8. A caliper assembly comprising:
a body member having a piston member;
a support bracket coupled with said body member;
a pair of brake pad assemblies coupled with said body member and said support member; and
at least one retaining clip coupled with each said brake pad assemblies, said retaining clip comprising:
a body member, said body member having a first portion secured to a brake pad plate, a second portion extending from said first portion, said third portion extending from said second portion, said third portion contacting the caliper support bracket for preventing the brake pad assembly from falling into the rotor clearance gap, said second portion providing a gap between said third portion and said support bracket, said gap providing enough distance to enable proper functioning of the brake pad assembly when it is positioned into the
caliper assembly.

9. The caliper according to claim 8, wherein said first portion includes a clamping member for securing to the brake pad plate.

10. The caliper according to one of claims 8 or 9, wherein said first portion includes a tang for securing to the brake pad plate.

11. The caliper according to any one of claims 8 to 10, wherein said second portion includes a biasing member.

12. The caliper according to any one of claims 8 to 11, wherein said third portion includes a wear indicator.

13. The caliper according to any one of claims 8 to 12, wherein said first portion includes a member adapted to secure with a fastener.

14. The caliper according to any one of claims 8 to 13, wherein said first and third portions are substantially parallel to one another.

15. The caliper according to any one of claims 8 to 14, wherein each brake pad assembly includes a plurality of retaining clips.

16. The caliper according to any one of claims 8 to 15, wherein said first portions is peened onto said brake pad assembly.

17. The caliper according to any one of claims 8 to 16, wherein said gap has a thickness between about 6 to about 18 mm.
